# EUROPEAN PATENT APPLICATION

(11) **EP 3 035 322 A1**
(43) Date of publication of application: **22.06.2016**
(21) Application number: 14198580.4
(22) Date of filing: 17.12.2014
(51) Int. Cl.: G09F 19/16, G09F 27/00, G09F 23/00, G09F 25/00

(54) **Interactive mirror**

(71) Applicant: Iconmobile Gmbh, 10179 Berlin (DE)
(72) Inventor: Schmitz-Le Hanne, Adrian, 10179 Berlin (DE)
(74) Representative: Vossius & Partner Patentanwälte Rechtsanwälte mbB

(57) **Abstract**

The present invention relates to an interactive mirror (1) and to a method for displaying information on an interactive mirror (1).

## Description

The present invention relates to an interactive mirror and to a method for displaying information on an interactive mirror.

During everyday life it is often beneficial to have the possibility to display certain information related to a specific product or article. For example, a consumer might be interested if a certain product is still available, what retailer offers a certain product and for what price. Sometimes a consumer has misplaced an operating manual or instructions for use and would thus like to retrieve the information from, e.g., the internet. For elderly people, the product insert or package insert provided together with, e.g., a pharmaceutical product may be written in letters which are so small that they can hardly be read. In these situations, people often use their smart phone or a tablet, if handy, to retrieve certain information from the internet or display certain information more clearly.

However, some people still do not have a smart phone or tablet and, in particular, elderly people often do not feel comfortable fiddling around with a complicated electronic device such as a smart phone or a tablet. Moreover, often such information is necessary when being in the bathroom where people typically do not use electronic devices such as a smart phone or a tablet.

It is therefore an object of the present invention to provide a device which allows for displaying certain information related to a specific product or article in a simple manner which requires minimum interaction by the user or consumer. This object is achieved with an interactive mirror according to claim 1 and a method for displaying information on an interactive mirror according to claim 7. Preferred embodiments of the invention are described in the dependent claims.

The present invention relates to an interactive mirror comprising a reflective mirror surface, at least one display integrated into the mirror surface, at least one optical detector integrated into the mirror, and a processor adapted to display information on the display based on information detected by the optical detector. The present invention is inter alia based on the idea to incorporate certain functions typically performed by an app on a smart phone into a mirror, which is typically present in every bathroom. By means of the optical detector which may, e.g., be a barcode reader or a QR code reader the processor of the interactive mirror is adapted to identify a certain product or article brought in proximity of the optical detector and/or to retrieve certain information related to the article or product brought in proximity of the detector. For example, a user may place the barcode of a hair colouring product close to the barcode reader of the interactive mirror. The barcode reader reads the barcode and the processor is adapted to display certain information on the display of the interactive mirror based on the read barcode. The displayed information may, for example, comprise instructions for use of the hair colouring product. Displaying this information on the display of a mirror provided in the bathroom provides certain advantages over providing this information on a tiny sheet of paper: First of all, such instructions for use are typically provided in rather small fonts and are thus hard to read. Second, and more importantly, it is rather impractical to fiddle with sheets of paper while dealing with water and hair dye. Finally, the processor may be adapted to display further information such as information which cannot be provided in writing. For example, the display may be adapted to display a time or a timer. For example, the processor may be adapted to retrieve the amount of time the hair dye has to be applied from the information baed on or referenced by the barcode reader and display an appropriately set timer on the mirror display. The user may then start the timer, e.g., acoustically, and thus does not have to fiddle with a watch or another timer. Of course, the processor may also provide different information on the display such as the ingredients of hair dye or information regarding related products such as specific shampoo for dyed hair and the like.

The detector may be a barcode reader or a QR code reader. The optical detector may also comprise a (preferably digital) camera or another optical system which is adapted to retrieve optical information from a product or article. Preferably, the optical detector is adapted to detect and to preferably identify and/or read one or a combination of text, letters, numerals, characters, figurative or graphical information such as a logo or trademark, colour, shape and/or contour of an article or object. These functions may be provided with one and the same optical detector such as a camera, which is also adapted to read a barcode and/or QR code. Alternatively, two or more different optical detectors may be provided. For example, the interactive mirror may comprise a first optical detector such as a barcode reader and/or a QR code reader which is specifically adapted to read a barcode and/or QR code provided, e.g., on the packaging of a product. In addition, the interactive mirror may comprise a second optical detector such as a digital camera which may be specifically adapted to identify a product or article by analyzing the shape or contour of the product or article, by identifying a logo or trademark on the article or the like.

The person skilled in the art will understand that the information may only be detected by the detector and further processed by the processor in order to identify or categorize the read information. If the product or article contains a barcode and/or a QR code the most efficient and secure way of identifying the product or article may be by means of reading said barcode or QR code. However, often such a barcode is only provided on the packaging of a product, but not on the product itself. Yet, once the consumer is going to use the product he or she might have already disposed of the packaging and merely have the product as such handy. It is thus preferred that the optical detector and/or the processor is adapted to read and/or identify text such as a product name on the product or graphical information such as a logo or trademark provided on the product. The colour, shape and/or contour of an object such as the shape of a specific flask or container may also be used to identify a specific product or article.

According to one aspect of the invention, the information displayed on the display may comprise information contained in the information read by the optical detector. For example, a barcode or QR code may comprise some encoded information which is decoded by the processor and displayed on the mirror display. Since, hwoever, the amount of information encoded in a barcode or QR code ist limited it is particularly preferred to retrieve further information related to the product by, e.g., referencing the read barcode or QR code against information and data provided, e.g., by the manufacturer or vendor of the product, as will be described in more detail below. The interactive mirror may also display the very text read by the optical detector. For example, a digital camera may read, e.g., instructions for use provided on the product, a product packaging or an enclosed label and simply display the read text on the mirror display.

According to another aspect of the present invention, the interactive mirror may further comprise a memory storing data. The information displayed on the display may then comprise information contained in the stored data and related to the information detected by the optical detector. For example, the memory may store certain data related to specific product types (such as different hair dyes) or to products of a specific manufacturer. Once a specific product placed in front of (or within the field of view of) the detector has been identified by means of a read barcode, a text on the product, a logo on the product, a container shape or the like, the processor will simply retrieve certain data stored in the memory and related to the identified product and display said information on the mirror display. In other words, the detected information may contain a link to certain stored data.

It is further preferred that the interactive mirror is adapted to communicate, by wire or wireless, with one or more external electronic devices. Preferably, the processor of the interactive mirror can connect to the internet to retrieve certain data. Thus, the data stored in the memory may be regularly updated. Alternatively, the processor may retrieve certain information from one or more external electronic devices and/or the internet based on the information detected by the optical detector. For example, the processor may connect to a data base of the producer and/or retailer of a specific article or product, e.g., via the internet, and retrieve certain information related to said product or article such as whether the product is still available or the actual pricing of the product. The detected information such as the read barcode may, for example, contain a link to a certain web address which contains the information to be retrieved or another reference to certain data to be displayed.

Preferably, the mirror further comprises a speaker and the processor is adapted to output information via the speaker based on the information detected by the optical detector. Preferably, the mirror comprises means for interacting with a user such as a touch screen, a presence detector, a motion detector, a microphone and/or push buttons.

The present invention is further related to a method for displaying information on an interactive mirror. According to the inventive method, an interactive mirror comprising a reflective mirror surface, at least one display, at least one optical detector having a field of view and being integrated in the mirror, and a processor is provided. The interactive mirror may comprise any combination of the features discussed above with respect to the inventive interactive mirror. Furthermore, an article or product is provided and the article or product is disposed within the field of view of said optical detector. Information linked to the article or product is collected by means of said optical detector. Then, information is displayed on the display, wherein said displayed information is based on the information collected by said optical detector.

The displayed information may contain information contained in the collected information, information contained in stored data stored in a memory of the interactive mirror and related to the information collected by the optical detector and/or information retrieved from one or more external electronic devices and/or the internet. Preferably, the retrieved information is provided by the producer and/or retailer of the product or article, preferably via an internet-accessible data base.

The displayed information may comprise one or a combination of the following pieces of information: product information such as declarations of content or details on risks and side effects; instructions for use or application; examples of application; information on similar or related products; additional information designed to facilitate the use of the article such as the display of the period of use and the like.

The displayed information may comprise written information such as text, graphical information such as pictograms, image information, acoustic information and/or information provided in the form of a movie.

The method preferably further comprises providing feedback by the user of the article or product using an input such as a gesture sensor, microphone, a keyboard and/or a touch screen. The feedback may be transferred to the producer and/or retailer of the article, e.g., via the internet. Said feedback may comprise, e.g., a rating and/or an order of the article or product or a related article or product.

The method preferably further comprises providing an online retail integration, allowing the user to easily purchase said product online, either based on a recommendation based on current articles or as a part of a replenishment activity purchasing the same article again.

The inventive interactive mirror as well as the inventive method allow for a simple and efficient way of displaying certain information related to certain products and articles to a user. The inventive mirror does not require any specific knowledge of electronic devices and allows for a very simple interaction by, e.g., simply placing a product of interest close to the detector of the mirror. The inventive mirror can display information in sufficiently large fonts and the displayed information can be read by a consumer while dealing with water, electronic devices, hair dye and the like.

The present invention is further related to the following aspects.
1. Interactive mirror comprising a reflective mirror surface, at least one display integrated into the mirror, preferably into the mirror surface, at least one detector integrated into the mirror, and a processor adapted to display information on the display based on information detected by the detector.
2. Interactive mirror according to aspect 1, wherein the detector is an optical detector.
3. Interactive mirror according to aspect 1 or 2, wherein the detector is a camera, preferably a digital camera.
4. Interactive mirror according to any one of the preceding aspects, wherein the detector is adapted to read a barcode and/or a QR code.
5. Interactive mirror according to any one of the preceding aspects, wherein the optical detector is adapted to detect, preferably to identify and/or read, one or a combination of: text, letters, numerals, characters, figurative or graphical information such as a logo or trademark, color, shape and/or contour of an object.
6. Interactive mirror according to any one of the preceding aspects, wherein the processor is integrated into the mirror.
7. Interactive mirror according to any one of the preceding aspects, wherein the information displayed on the display comprises information contained in the information detected by the detector.
8. Interactive mirror according to any one of the preceding aspects, further comprising a memory storing data, wherein the information displayed on the display comprises information contained in the stored data and related to the information detected by the detector.
9. Interactive mirror according to any one of the preceding aspects, wherein the interactive mirror is adapted to communicate, by wire or wireless, with one or more external electronic devices.
10. Interactive mirror according to aspect 9, wherein the interactive mirror comprises one or a combination of the following interfaces: near field communication, Bluetooth transmitter and/or receiver, Wi-Fi, TP Ethernet, 433/866 MHz network, ZigBee network, RFID sensor, infrared transmitter and/or receiver.
11. Interactive mirror according to aspect 9 or 10, wherein the processor is adapted to retrieve information from one or more external electronic devices based on the information detected by the detector, and wherein the information displayed on the display comprises the information retrieved or part of it.
12. Interactive mirror according to any one of the preceding aspects, wherein the detector is integrated in the mirror surface or mounted on one or more of the mirror's sides, preferably on the mirror's bottom side.
13. Interactive mirror according to any one of the preceding aspects, wherein the mirror further comprises a speaker and wherein the processor is adapted to output information via the speaker based on the information detected by the detector.
14. Interactive mirror according to any one of the preceding aspects, wherein the display is adapted to display a time.
15. Interactive mirror according to any one of the preceding aspects, wherein the display is adapted to display a timer.
16. Interactive mirror according to aspect 15, wherein the processor is adapted to provide the timer with a time period on the basis of the information detected by the detector.
17. Interactive mirror according to aspect 15 or 16, wherein the displayed timer can be started by a user, preferably acoustically.
18. Interactive mirror according to any one of the preceding aspects, wherein the mirror, preferably the mirror surface, comprises means for interacting with a user.
19. Interactive mirror according to aspect 18, wherein the means for interacting comprises one or a combination of: touch screen, presence detector, motion detector, microphone, push buttons.
20. Method for displaying information on an interactive mirror, the method comprising the following steps:
   a) providing an interactive mirror comprising a reflective mirror surface, at least one display, at least one optical detector having a field of view and being integrated in the mirror, and a processor, preferably an interactive mirror according to any one of aspects 1 to 20;
   b) providing an article;
   c) disposing the article within the field of view of said optical detector;
   d) collecting information linked to the article by means of said optical detector; and
   e) displaying information on the display based on the information collected by said optical detector.
21. Method according to aspect 20, wherein the collected information contains one or a combination of the following information provided on the article: text, letters, numerals, characters, figurative or graphical information such as a logo or trademark, color, barcode, QR code
22. Method according to aspect 20 or 21, wherein the collected information contains one or a combination of the following information inherent to the article: shape of the article or a part thereof; contour of the article or a part thereof.
23. Method according to any one of aspects 20 to 22, wherein the information displayed on the display comprises information contained in the collected information.
24. Method according to any one of aspects 20 to 23, further comprising the step of storing data in a memory, wherein the information displayed on the display comprises information contained in the stored data and related to the information collected by the optical detector.
25. Method according to any one of aspects 20 to 24, further comprising the step of retrieving information from one or more external electronic devices based on the collected information, wherein the information displayed on the display comprises the information retrieved or part of it.
26. Method according to aspect 25, wherein the information retrieved is provided by the producer and/or retailer of the article.
27. Method according to aspect 25 or 26, wherein the information is retrieved via an internet-accessible data source, preferably vian an internet-accessible database.
28. Method according to any one of aspects 20 to 27, wherein the information displayed comprises one or a combination of the following pieces of information: product information such as declarations of content or details on risks and side effects; instructions for use or application; examples of application; information on similar or related products; additional information designed to facilitate the use of the article such as the display of the period of use.
29. Method according to any one of aspects 20 to 28, wherein the information displayed comprises written information, image information, acoustic information and/or information provided in the form of a movie.
30. Method according to any one of aspects 20 to 29, wherein the mirror further comprises an input, preferably a gesture sensor, microphone, keyboard and/or touch screen, the method further comprising the following steps: providing feedback by the user of the article using the input and transferring the feedback to the producer and/or retailer of the article.
31. Method according to aspect 30, wherein the feedback comprises a rating and/or an order of the article.

Preferred embodiments of the present invention are further elucidated with reference to the following Figure which shows:

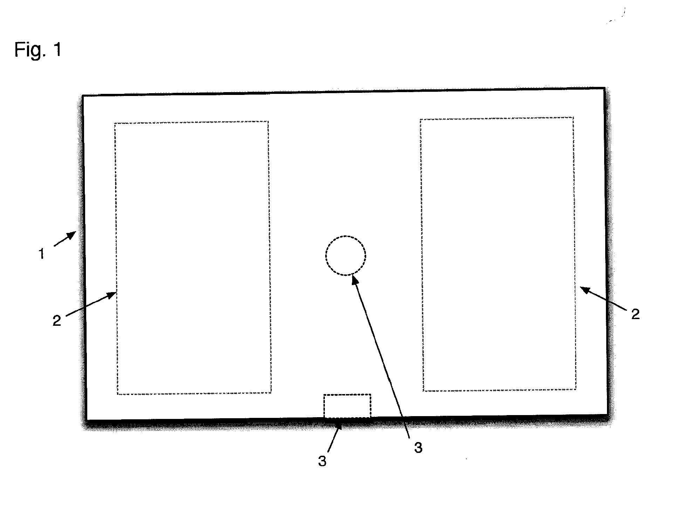

Fig. 1 schematically a preferred embodiment of an interactive mirror according to the present invention.

Fig. 1 schematically shows an interactive mirror 1 comprising a reflective mirror surface, at least one display 2 integrated into the mirror surface and at least one optical detector 3 integrated into the mirror. A processor adapted to display information on the display 2 based on information detected by the detector 3 is not shown in Fig. 1, but is preferably also integrated into the interactive mirror 1. In the embodiment shown in Fig. 1 two displays 2 are integrated into the mirror surface. Of course, the mirror may comprise only a single display or more than two displays, e.g., three, four, or more displays. The various displays 2 need not be of the same size and shape (as shown in Fig. 1). Alternatively, identical displays (in size and shape) may be provided.

In the embodiment shown in Fig. 1 two optical detectors 3 are integrated into the mirror. Of course, the mirror may comprise only a single optical detector or more than two optical detectors, e.g., three, four, or more optical detectors. The optical detector 3 may be a barcode reader or a digital camera and may be provided on the mirror surface such as shown in Fig. 1 or mounted on a side of the mirror, preferably on the mirror's bottom side. It may also be advantageous to provide two or more optical detectors. Thus, the product or article need not be held at a very specific spot but can simply be brought into proximity of the mirror.

During use of the inventive mirror the optical detector 3 scans the area in front of the mirror for a graphical code such as a 1D or 2D code, a shape, logo, text or another attribute which can be electronically detected and processed.

Depending on the place and type of the installed optical detector, the user has to either manually place the product in front of the optical reader (near field IR or CCD optical reader) or simply hold the product in front of the mirror (CCD HD camera or similar device) in order to start the product recognition and display of data, instructions and/or applications.

In most cases the product will be identified by a 1D barcode, typically specified by the UPC or EAN barcode standard. Depending on its capabilities and technical integration level, the optical reader component 3 either digitizes the barcode area based on the shape and line pattern, then decodes the number stored within the UPC or EAN code and sends the number via a data connection such as an USB bus to the host system, or transfers the binary image data containing the barcode representation to the host system which then decodes the pattern based on the UPC or EAN standard. This process is similar for other graphical encoded data such as 2D codes including codes based on the Datamatrix and QR Code standard.

Alternatively, the product can be identified by analyzing the image containing the product for specific text contents (OCR optical character recognition technology), logos or shapes (pattern recognition technology) and/or specific shapes or colors. Such Barcode/2D Code, OCR and pattern recognition technologies are widespread and well documented.

For recognizing products based on the text, logo, shape or other features which cannot be directly transformed into an unique product reference, the data set containing data such as a binary image, shapes, outlines etc. is processed locally against a database of know objects via a pattern recognition algorithm or other recognition approach, or processed via a networked ressource such as a backend service which receives pattern, shape and/or image information and then does the pattern recognition process decentrally.

Based on the number derived from the UPC or EAN code or another unique identifier the host system then searches for locallly stored product content and/or sends a query to a networked ressource such as an internet service to fetch product contents, descriptions and applications, which are then displayed on one or more mirror displays 2. The stored content can also enable the user to interact with the mirror for gaining further information, applications and contents, both stored locally or on a network ressource. Retrieved content and applications can be stored locally to reduce access and loading time on further requests ("cacheing").

## Claims

1. Interactive mirror comprising a reflective mirror surface, at least one display integrated in the mirror surface, at least one optical detector integrated in the mirror, and a processor adapted to display information on the display based on information detected by the optical detector.

2. Interactive mirror according to claim 1, wherein the optical detector is an optical reader adapted to read a barcode and/or QR code and/or wherein the optical detector is a camera, preferably a digital camera.

3. Interactive mirror according to claim 1 or 2, wherein the optical detector is adapted to detect one or a combination of: text, letters, numerals, characters, figurative or graphical information such as a logo or trademark, color, shape and/or contour of an object; and wherein the optical detector is preferably adapted to identify and/or read one or a combination of: text, letters, numerals, characters, figurative or graphical information such as a logo or trademark, color, shape and/or contour of an object.

4. Interactive mirror according to any one of the preceding claims, wherein the information displayed on the display comprises information contained in the information detected by the optical detector.

5. Interactive mirror according to any one of the preceding claims, wherein the interactive mirror is adapted to communicate, by wire or wireless, with one or more external electronic devices, wherein the interactive mirror preferably comprises one or a combination of the following interfaces: near field communication, Bluetooth transmitter and/or receiver, Wi-Fi, TP Ethernet, 433/866 MHz network, ZigBee network, RFID sensor, infrared transmitter and/or receiver.

6. Interactive mirror according to claim 5, wherein the processor is adapted to retrieve information from one or more external electronic devices based on the information detected by the optical detector, and wherein the information displayed on the display comprises the information retrieved or part of it.

7. Method for displaying information on an interactive mirror, the method comprising the following steps:
a) providing an interactive mirror comprising a reflective mirror surface, at least one display, at least one optical detector having a field of view and being integrated in the mirror, and a processor, preferably an interactive mirror according to any one of claims 1 to 6;
b) providing an article;
c) disposing the article within the field of view of said optical detector;
d) collecting information linked to the article by means of said optical detector; and
e) displaying information on the display based on the information collected by said optical detector.

8. Method according to claim 7, wherein the collected information contains one or a combination of the following information provided on the article: text, letters, numerals, characters, figurative or graphical information such as a logo or trademark, color, barcode, QR code, and/or wherein the collected information contains one or a combination of the following information inherent to the article: shape of the article or a part thereof; contour of the article or a part thereof.

9. Method according to claim 7 or 8, wherein the information displayed on the display comprises information contained in the collected information.

10. Method according to claim 7, 8 or 9, further comprising the step of storing data in a memory, wherein the information displayed on the display comprises information contained in the stored data and related to the information collected by the optical detector.

11. Method according to any one of claims 7 to 10, further comprising the step of retrieving information from one or more external electronic devices based on the collected information, wherein the information displayed on the display comprises the information retrieved or part of it, wherein the information retrieved is preferably provided by the producer and/or retailer of the article, preferably via an internet-accessible database.

12. Method according to any one of claims 7 to 11, wherein the information displayed comprises one or a combination of the following pieces of information: product information such as declarations of content or details on risks and side effects; instructions for use or application; examples of application; information on similar or related products; additional information designed to facilitate the use of the article such as the display of the period of use.

13. Method according to any one of claims 7 to 12, wherein the information displayed comprises written information, image information, acoustic information and/or information provided in the form of a movie.

14. Method according to any one of claims 7 to 13, wherein the mirror further comprises an input, preferably a gesture sensor, microphone, keyboard and/or touch screen, the method further comprising the following steps: providing feedback by the user of the article using the input and transferring the feedback to the producer and/or retailer of the article.

15. Method according to claim 14, wherein the feedback comprises a rating and/or an order of the article.
